# EUROPEAN PATENT SPECIFICATION

(11) **EP 2 086 908 B1**
(45) Date of publication and mention of the grant of the patent: **24.07.2013**
(21) Application number: 07820990.5
(22) Date of filing: 05.10.2007
(51) Int. Cl.: C04B 35/488

(54) **SINTERED MATERIAL COMPRISING STABILIZED ZIRCONIA, ALUMINA AND RARE EART ALUMINATE PLATELETS,MANUFACTURING METHOD AND USES**
GESINTERTES MATERIAL, UMFASSEND STABILISIERTES ZIRCONIUMOXID, ALUMINIUMOXID UND SELTENERDMETALLALUMINATPLÄTTCHEN, HERSTELLUNGSVERFAHREN UND VERWENDUNGEN
MATÉRIAU FRITTÉ COMPRENANT DE LA ZIRCONE, DE L'ALUMINE ET DES GRANULÉS D'ALUMINATE DE TERRE RARE STABILISÉS, PROCÉDÉ DE FABRICATION ET D'UTILISATIONS DE CELUI-CI

(30) Priority: 05.10.2006 EP 06121793; 05.10.2006 US 849467 P
(43) Date of publication of application: 12.08.2009
(73) Proprietor: Vita Zahnfabrik H. Rauter GmbH & Co. KG, 79713 Bad Säckingen (DE)
(72) Inventor: BURGER, Wolfgang, 73207 Plochingen (DE); LEONHARDT, Wolfgang, 73269 Hochdorf (DE); THIEL, Norbert, 79713 Bad Säckingen (DE); STEPHAN, Marc, 79539 Lörrach (DE)
(74) Representative: Fleck, Hermann-Josef
(86) International application number: PCT/EP2007/060617
(87) International publication number: WO 2008/040813

(56) References cited:
- MIURA M ET AL: "FORMATION OF PLATE-LIKE LANTHANUM-B-ALUMINATE CRYSTAL IN CE-TZP MATRIX" JOURNAL OF MATERIALS SCIENCE, SPRINGER / BUSINESS MEDIA, DORDRECHT, NL, vol. 29, no. 1, January 1994 (1994-01), pages 262-268, XP000433025 ISSN: 0022-2461 cited in the application
- TSUKUMA K ET AL: "Mechanical property and microstructure of TZP and TZP/Al2O3 composites" ADVANCED STRUCTURAL CERAMICS SYMPOSIUM MATER. RES. SOC PITTSBURGH, PA, USA, 1987, pages 123-135, XP008075951 ISBN: 0-931837-43-X cited in the application
- TSUKUMA K: "Conversion from [beta]-Ce2O3.11Al2O3 to [alpha]-Al2O3 in tetragonal ZrO2 matrix" JOURNAL OF THE AMERICAN CERAMIC SOCIETY AMERICAN CERAMIC SOC USA, vol. 83, no. 12, December 2000 (2000-12), pages 3219-3221, XP002423494 ISSN: 0002-7820 cited in the application
- R.C. ROPP AND B. CARROLL: "Solid-state kinetics of LaAl11O18" JOURNAL OF THE AMERICAN CERAMIC SOCIETY, vol. 63, 1980, pages 416-419, XP001266546
- BURGER W ET AL: "New Y-TZP powders for medical grade zirconia" J MATER SCI MATER MED; JOURNAL OF MATERIALS SCIENCE: MATERIALS IN MEDICINE FEB 1997 CHAPMAN & HALL LTD, LONDON, ENGL, vol. 8, no. 2, February 1997 (1997-02), pages 113-118, XP000914929 cited in the application

## Description

The present invention relates to a material based on a partially stabilized zirconia matrix, and to a process for the preparation and use of the material. The material according to the invention can be employed, for example, as a sintered compact for various fields of application.

Tetragonally stabilized zirconia materials are known in the prior art. They usually have a high mechanical strength and a relatively high fracture toughness. In addition, they are biocompatible.

As a disadvantage of these materials, their relatively low hydrothermal resistance has been found. In a humid atmosphere, the materials lose strength. A number of attempts have been made already in the prior art to improve their hydrothermal resistance. Thus, a significantly improved hydrothermal resistance from the alloying of alumina in concentrations of less than 0.5% by weight and applying sinter temperatures of 1350 °C over that of conventionally prepared tetragonally stabilized zirconia has been published in the form of a product data sheet (TOSOH ZIRCONIA POWDER "E" GRADES - new improved zirconia powder; printed April 03 in Japan).

In an earlier work, the coating of the zirconia grains with the stabilizing yttrium oxide has been described, and an amount of 0.1% by weight of alumina was already contained in this composition (W. Burger et al., Journal of Materials Science: Materials in Medicine 8 (1997) 113-118; C. Piconi et al., Biomaterials 19 (1998) 1489-1494). It was attempted to create improved materials.

Further, EP-A-0 466 836 relates to reinforcement of ceramic materials with platelets. This document relates to a ceramic body consisting of from 10 to 99% by volume of a zirconia matrix that is partially stabilized and from 1 to 90% by volume of SrAl₁₂O₁₉ platelets with an aspect ratio of > 2. The molar ratio of SrO : Al₂O₃ is specified to be 0.01 or 0.02 to 0.2 or 0.3. In the stoichiometric composition, the ratio of SrO : Al₂O₃ = 1:6 = 0.17. Thus, alumina and zirconia may be in excess.

EP-A-0 542 815 relates to a sintered molding consisting of a matrix material formed from an alumina/chromium oxide mixed crystal and embedded into the zirconia. As stabilizing oxides, oxides of cerium, praseodymium, terbium or yttrium are employed. The stabilizing oxides are added in such amounts that more than 90% by volume of the zirconia is in the tetragonal modification. The molar ratio between the zirconia containing the stabilizing oxides and chromium oxide is from 1000:1 to 20:1.

In particular, a material is described that comprises a matrix whose proportion is 60 to 98% by volume and which consists of 67.1% by volume of an Al₂O₃-Cr₂O₃ mixed crystal and from 0.8 to 32.9% by volume of hexagonal SrAl₁₂₋ₓCrₓO₁₉ platelets as well as 2-40% by volume of tetragonally stabilized zirconia.

DE-A-198 50 366 relates to a sintered compact with a matrix material that contains, in addition to an alumina/chromium oxide mixed crystal, another mixed crystal selected from at least one mixed crystal according to the general formulas stated therein and contains alkali metals, alkaline earth metals, cadmium, lead or mercury and rare earth metals.

M. Miura, H. Hongoh, T. Yogo, S. Hirano and T. Fujii disclose in "Formation of plate like lanthanum-β- Aluminate crystal in Ce-TZP matrix" (J. Mat. Sci., 29 (1994), 262 - 268) besides a material system Ce-TZP/Al₂O₃/La₂O₃ the influence of grain size of used aluminium oxide particles on platelet formation when using very fine powders. It was found a rather independent size of the platelets having a rather course grain size in the matrix independent of the sinter temperature used. Formation of platelets has been monitored beyond 1.500 °C and the complete formation of platelets started about 1.600 ° C.

K. Tsukuma and T. Takahata, (Mat. Res. Soc. Syp. Porc., viol. 78 (1987), 123 - 135) disclose a composition of material: ZrO₂ (2 Mol-% (≈ 3,6 wt-%)Y₂O₃), Al₂O₃ and La₂O₃ and disclose i.a. in table 2 40 wt-% LaAl₁₁O₁₈. The formation occurs at 1.450 °C; the preparation of samples is performed with sintering at 1.500 °C, followed by an hot isostatic pressing process also performed at 1.500 °C. The Y-TZP/β-LaAl₂O₃-mixture is not so deformable as a Y-TZP/Al₂O₃-mixture and based on this result it can be suggested that platelets take care for the suppression of a plastic deformation (p.133). Plastic deformation and fracture toughness are in a direct relation. To the skilled person these results do not suggest any relation between platelet formation and increase of fracture toughness.

K. Tsukuma (J. Am. Ceram. Soc., 83(200), 3219 - 3221) discloses the system Y-TZP:CeO₂:Al₂O₃ in a composition of 60:9,05:30,95. A formation of platelets during sintering in oxidizing atmosphere does not take place. During sintering in reducing atmosphere a new platelet formation can be monitored at a temperature of 1.400 °C. At a temperature of 1.500 °C in reducing atmosphere a platelet formation can be monitored. In the mechanical characterization the platelet containing material does not differ substantially from the material Y-TZP/Al₂O₃ so that the author concludes: "The high-temperature bending strength of the converted α-Al₂O₃ composite was almost the same as that of the β-Ce₂O₃ 11Al₂O₃ composite". Also these experiments teach the skilled person that there is no relation between increasing fracture toughness and platelet reinforced ceramics. Furthermore, no lanthanoxide is used.

The fracture toughness of the Y-TZP materials is still too low today for many applications.
The object of the invention is to provide a material having an improved hydrothermal resistance, high strength and fracture toughness. This object is achieved by the material according to the invention.
The material according to the invention is defined in claim 1.

A material comprising a composition of 3 mole percent yttria and 15 mole percent ceria are not encompassed by the present invention due to the conditions

The symbol RE means one or more representatives of rare earth metals.

The particles sizes are measured by means of the sedimentation method or the LASER-ftection-granutometry.

In one embodiment of the invention the material comprises a volume fraction of the hexagonal platelets from 10 to 75 % by volume.

The material according to the invention exhibits a high hydrothermal stability.

The hexagonal platelets of the material according to the invention contain lanthanum oxide.

In its chemical composition, the material according to the invention is based on a tetragonally stabilized zirconia matrix. Homogeneously distributed globular alumina particles are incorporated into this matrix. Parts of these particles react with the platelet-forming rare earth oxide during the sintering process to form hexagonal platelets of general formula REAl₁₁O₁₈. The aspect ratio of these hexagonal platelets is at least 2. The abundance of the platelets relative to globular alumina in the zirconia matrix is controlled by the alloyed amount of alumina and rare earth oxide.

The material according to the invention can be prepared by a process comprising the following steps:
- grinding the powder mixture in aqueous suspension;
- adding a binder;
- eliminating coarse particles;
- spray-drying;
- pressing;
- sintering.

A prefemed form of the sintering process is hot isostatic postcompaction. When this process is applied, the compact is presintered at first to a density at which a closed porosity is reached. The thus presintered compact is subsequently subjected to a second temperature treatment, an isostatic pressure of from 1 to 150 MPa acting on the component during such temperature treatment. This process step is followed by a further temperature treatment under normal pressure in order to release any residual stress.

Alternatively to pressing, the material may also be admixed with organic auxiliaries in order to become flowable at higher temperatures. This flowable composition is processed by the injection molding method.

The material according to the invention is particularly suitable for preparing ceramic compacts that can be employed in many technical fields.

The sintered compacts according to the invention are characterized by a high mechanical strength of ≥ 800 MPa as measured according to DIN EN ISO 6872, a high fracture toughness of ≥ 6 MPa·m^{1/2} as measured according to DIN CEN/TS 14425-5, a modulus of elasticity of s 250 GPa as measured according to DIN EN 843 Part 2 and a Vickers hardness HV_{0.5} ≤ 1500 as measured according to DIN 50113.

The invention also relates to a process for preparing a ceramic compact according claim 4.

Due to its low modulus of elasticity and its improved fracture toughness, the compact according to the invention can be employed in the medical field as a high strength and tough material for bridges in the orthodontic field, as a dental implant, as a hip, knee, shoulder, ankle and finger implant.

In engineering, in the mechanical field, the compact according to the invention can be employed, in particular, as a wear component with sealing properties and a high damage tolerance due to its high mechanical strength and its low, for ceramic materials, modulus of elasticity.

The invention is further illustrated by the following Examples.

### Examples 1-12

The material mixtures summarized in Table 1 were first dispersed in water, and the suspension obtained was subsequently deagglomerated and homogenized in a mixed grinding operation. After having been separated from the milling balls, the ground suspension was admixed with a temporary binder. Subsequently, ready-to-press granules were prepared by applying spray-drying technology. From these ready-to-press granules, specimens were pressed and sintered without pressure.

**Table 1**

| | Ex. 1* | Ex. 2* | Ex. 3* | Ex. 4* | Ex. 5* | Ex. 6* | Ex. 7 |
|---|---|---|---|---|---|---|---|
| ZrO₂ [% by weight] | 59.2 | 82.0 | 80.0 | 74.0 | 86.8 | 84.5 | 85.7 |
| Y₂O₃ [% by weight] | 1.0 | 3.0 | 1.7 | 3.0 | 4.0 | 1.9 | 4.3 |
| CeO₂ [% by weight] | 11.1 | 5.0 | 8.3 | 3.0 | 4.2 | 8.6 | 0.0 |
| Al₂O₃ [% by weight] | 25.0 | 8.5 | 8.3 | 18.6 | 4.5 | 4.5 | 8.3 |
| La₂O₃ [% by weight] | 3.7 | 1.5 | 1.7 | 1.4 | 0.5 | 0.5 | 1.7 |

| | Ex. 8* | Ex. 9* | Ex. 11* | Ex. 11* | Ex. 12* | | |
|---|---|---|---|---|---|---|---|
| ZrO₂ [wt-%] | 67 | 73,9 | 65,9 | 74,8 | 67,3 | | |
| Y₂O₃ [wt-%] | 2 | 3,5 | 0,9 | 0,9 | 2,2 | | |
| CeO₂ [wt-%] | 6 | 2,7 | 8,1 | 14,4 | 1,1 | | |
| Al₂O₃ [wt-%] | 20 | 18,6 | 19,9 | 8,1 | 25,6 | | |
| La₂O₃ [wt-%] | 5 | 1,3 | 5,2 | 1,8 | 3,8 | | |

| | | | | | | | |
|---|---|---|---|---|---|---|---|
| * means reference examples | | | | | | | |

In addition to compaction without pressure, the composition from Example 7 was also subjected to hot isostatic postcompaction. The following Table 2 shows the effect of this process on the properties as compared to a variant of sintering without pressure:

**Table 2**

| example 7 | sintered | | hiped | |
|---|---|---|---|---|
| | σ_{3B} [MPa] | k_{lc} [MPa√m] | σ_{3B} [MPa] | k_{lc} [MPa√m] |
| | 1080 | 6,3 | 1440 | 7,7 |
| | 1071 | 7,1 | | |
| | 1104 | | | |
| | 1146 | 8,5 | 1499 | |
| | 1172 | | | |
| | 1109 | 7,1 | 1449 | |
| | 1020 | | | |
| | 1101 | 7,2 | | |
| | 1131 | | | |

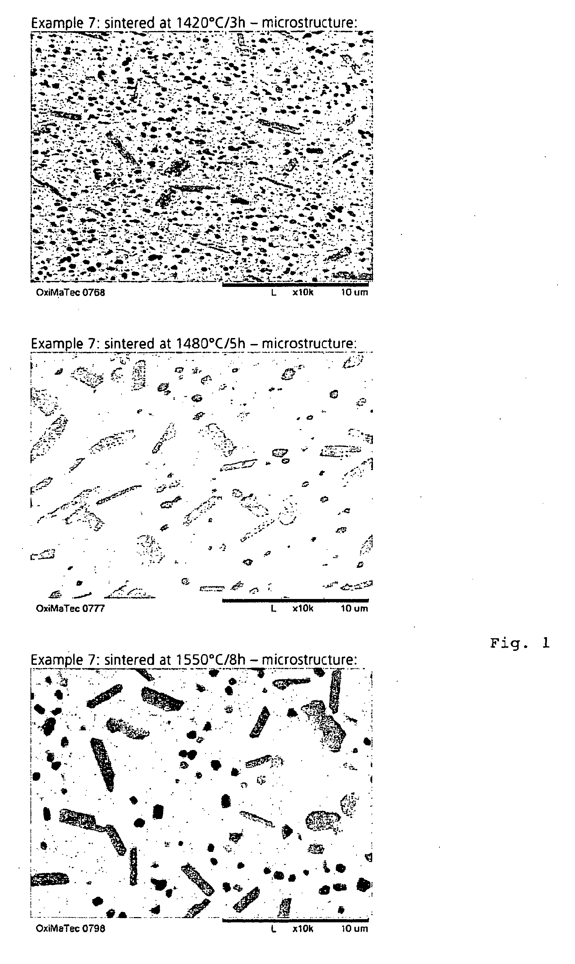

Fig. 1 shows three micrographs of structures obtainable from compositions of example 7 at various conditions, sintering temperature at 1420 C for 3h, at 1480 C for 5h and at 1550 C for 8h.

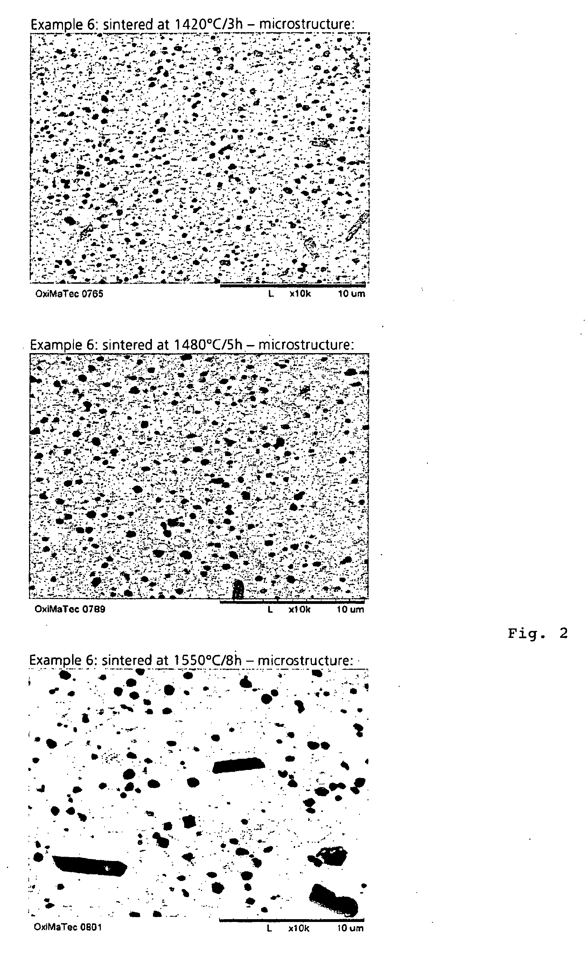

Fig. 2 shows three micrographs of structures obtainable from compositions of example 6 at various conditions, sintering temperature at 1420 C for 3h, at 1480 C for 5h and at 1550 C for 8h.

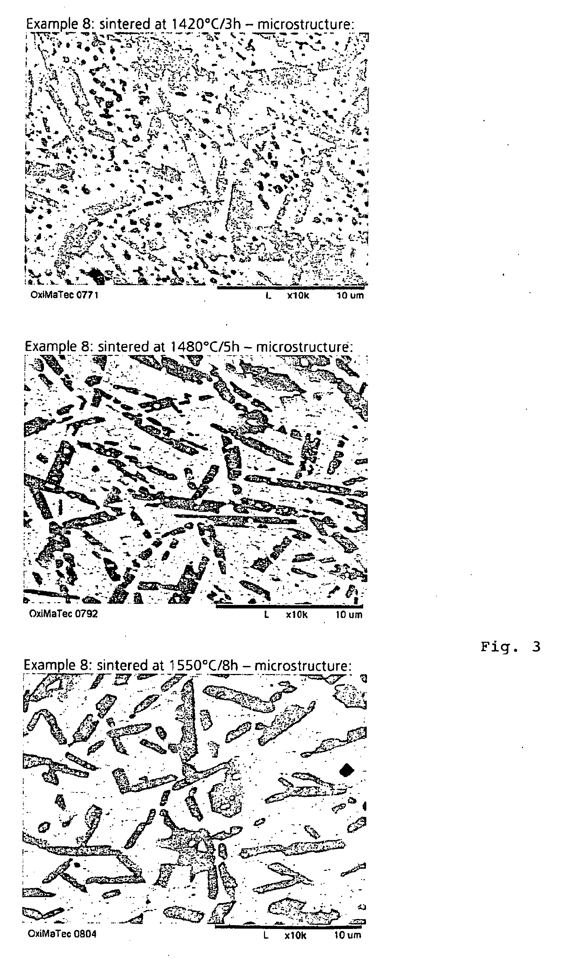

Fig. 3 three micrographs of structures obtainable from compositions of example 8 at various conditions, sintering temperature at 1420 C for 3h, at 1480 C for 5h and at 1550 C for 8h.

## Claims

1. A sintered material comprising:
from 98-50 % by volume of zirconia as a matrix, which is stabilized with
i) either of from 2 to 3 mole percent of yttria
ii) or of from 10 to 15 mole percent of ceria;
iii) or a mixture of ceria and yttria in the range of amounts as given in i) and ii) wherein a maximum stabilization of 3 mole percent related to pure yttria and 15 mole percent related to pure ceria respectively are not exceeded 3 mole percent yttria and 15 mole percent ceria being not encompassed, and wherein the term mole percent is related to the zirconia matrix and wherein the zirconia matrix is obtainable from
a) a powder of particles of zirconia having a mean particle size of ≤ 0.35 µm,
b) the particles are coated with the stabilizing oxides yttria and/or ceria for stabilizing zirconia,
c) a stabilization of the tetragonal phase is performed via a diffusion reaction by a sintering process,
and
from 2 to 50% by volume of alumina of which from 5 to 90 % by volume is in the form of hexagonal platelets of general formula LaAl₁₁O₁₈ which are formed by sintering at temperatures of less than 1500 °C.

2. The material according to claim 1,
wherein a volume fraction of the hexagonal platelets is from 10 to 75 % by volume.

3. The material according to at least one of claims 1 to 2,
wherein the aspect ratio of said hexagonal platelets is at least 2.

4. A process in which a sintered material according to at least one of claims 1 to 3 is prepared
from 98-50 % by volume of zirconia which is stabilized with
i) either of from 2 to 3 mole percent of yttria,
ii) or from 10 to 15 mole percent of ceria,
iii) or a mixture of ceria and yttria in the range of amounts as given in i) and ii) wherein a maximum stabilization of 3 mole percent related to pure yttria and 15 mole percent related to pure ceria respectively are not exceeded 3 mole percent yttria and 15 mole percent ceria being not encompassed, and wherein the zirconia matrix is obtained from
a) a powder of particles of zirconia having a mean particle size of ≤ 0,35 µm,
b) the particles are coated with stabilizing oxides yttria and/or ceria for stabilizing zirconia,
c) a stabilization of the tetragonal phase is perfomed via a diffusion reaction by a sintering process,
and from 2 to 50 % by volume of aluminia of which from 5 to 90 % by volume is in the form of hexagonal platelets of general formula LaAl₁₁O₁₈ which are formed by sintering at temperatures of less than 1500 °C,
wherein a powder mixture is ground in aqueous suspension, admixed with a binder, spray-dried, pressed and sintered.

5. The process according to claim 4,
wherein a presintering to closed porosity is followed by a hot isostatic postcompaction process.

6. The process according to claim 4 and/or 5,
wherein the spray-dried powder mixture is subjected to plasticization, injected into a mold, freed from binder, sintered or presintered and subjected to hot isostatic postcompaction.

7. A sintered material according to one of claims 1 to 3,
the sintered material having a mechanical strength of ≥ 800 MPa as measured according to DIN EN ISO 6872 and/or having a fracture toughness of ≥ 6 MPa·m^{1/2} as measured according to DIN CEN/TS 14425-5 and/or having a modulus of elasticity of ≤ 250 GPa as measured according to DIN EN 843 Part 2.

8. The compact according to claim 7, having a Vickers hardness HV_{0.5} of ≤ 1500.

9. The compact according to any of claims 7 or 8 for use in medicine.

10. The compact according to claim 9 for use in dental-prosthetic care, as a dental implant, as a hip, knee, shoulder, ankle and finger implant.

11. The compact according to claim 9 for use as a tool for inserting implant screws in the dental field, drill, scalpel, broaching tool and cutter.

12. Use of the compact according to any of claims 7 or 8 in engineering.

13. The use according to claim 12 in the mechanical field in hydraulics and pneumatics, as a wear component with sealing properties, as a printing plate, as a heat-insulating component, as a technical cutting edge and as a non-lubricated glide pairing in microprecision technology.

## Patentansprüche

1. Gesintertes Material, umfassend:
98-50 Vol.-% an Zirkoniumoxid als Matrix, die stabilisiert ist mit
i) entweder 2 bis 3 Molprozent Yttriumoxid;
ii) oder 10 bis 15 Molprozent Ceroxid;
iii) oder einem Gemisch von Ceroxid und Yttriumoxid in den in i) und ii) gegebenen Mengenbereichen, wobei eine Maximalstabilisierung von 3 Molprozent bezogen auf reines Yttriumoxid bzw. 15 Molprozent bezogen auf reines Ceroxid nicht überschritten wird und 3 Molprozent Yttriumoxid und 15 Molprozent Ceroxid nicht umfasst sind, und wobei sich der Begriff Molprozent auf die Zirkoniumoxid-Matrix bezieht und wobei die Zirkoniumoxid-Matrix erhältlich ist aus
a) einem Pulver von Zirkoniumoxid-Teilchen mit einer mittleren Teilchengröße von ≤ 0,35 µm,
b) die Teilchen mit den stabilisierenden Oxiden Yttriumoxid und/oder Ceroxid zum Stabilisieren von Zirkoniumoxid beschichtet sind,
c) eine Stabilisierung der tetragonalen Phase über eine Diffusionsreaktion durch ein Sinterverfahren durchgeführt wird,
und
2 bis 50 Vol.-% Aluminiumoxid, von dem sich 5 bis 90 Vol.-% in der Form von hexagonalen Plättchen der allgemeinen Formel LaAl₁₁O₁₈ befinden, die durch Sintern bei Temperaturen von weniger als 1500 °C gebildet sind.

2. Material gemäß Anspruch 1,
wobei der Volumenanteil der hexagonalen Plättchen von 10 bis 75 Vol.-% beträgt.

3. Material gemäß wenigstens einem der Ansprüche 1 und 2,
wobei das Aspektverhältnis der hexagonalen Plättchen wenigstens 2 beträgt.

4. Verfahren, bei dem ein gesintertes Material gemäß wenigstens einem der Ansprüche 1 bis 3 hergestellt wird
aus 98-50 Vol.-% an Zirkoniumoxid, das stabilisiert ist mit
i) entweder 2 bis 3 Molprozent Yttriumoxid
ii) oder 10 bis 15 Molprozent Ceroxid,
iii) oder einem Gemisch von Ceroxid und Yttriumoxid in den in i) und ii) gegebenen Mengenbereichen, wobei eine Maximalstabilisierung von 3 Molprozent bezogen auf reines Yttriumoxid bzw. 15 Molprozent bezogen auf reines Ceroxid nicht überschritten wird und 3 Molprozent Yttriumoxid und 15 Molprozent Ceroxid nicht umfasst sind, und wobei die Zirkoniumoxid-Matrix erhalten ist aus
a) einem Pulver von Zirkoniumoxid-Teilchen mit einer mittleren Teilchengröße von ≤ 0,35 µm,
b) die Teilchen mit den stabilisierenden Oxiden Yttriumoxid und/oder Ceroxid zum Stabilisieren von Zirkoniumoxid beschichtet sind,
c) eine Stabilisierung der tetragonalen Phase über eine Diffusionsreaktion durch ein Sinterverfahren durchgeführt wird,
und 2 bis 50 Vol. -% Aluminiumoxid, von dem sich 5 bis 90 Vol.-% in der Form von hexagonalen Plättchen der allgemeinen Formel LaAl₁₁O₁₈ befindet, die durch Sintern bei Temperaturen von weniger als 1500 °C gebildet sind,
wobei ein Pulvergemisch in wässriger Suspension gemahlen, mit einem Bindemittel gemischt, sprühgetrocknet, gepresst und gesintert wird.

5. Verfahren gemäß Anspruch 4,
wobei Vorsintern auf geschlossene Porosität von einem heißisostatischen Nachkompaktierungsverfahren gefolgt wird.

6. Verfahren gemäß Anspruch 4 und/oder 5,
wobei das sprühgetrocknete Pulvergemisch Weichmachen unterworfen, in ein Formwerkzeug eingespritzt, von Bindemittel befreit, gesintert oder vorgesintert und heißisostatischer Nachkompaktierung unterworfen wird.

7. Gesintertes Material gemäß einem der Ansprüche 1 bis 3,
wobei das gesinterte Material eine mechanische Festigkeit von ≥ 800 MPa wie gemessen gemäß DIN EN ISO 6872 aufweist und/oder eine Bruchzähigkeit von ≥ 6 MPa.m^{1/2} wie gemessen gemäß DIN CEN/TS 14425-5 aufweist und/oder einen Elastizitätsmodul von ≤ 250 GPa wie gemessen gemäß DIN EN 843 Teil 2 aufweist.

8. Presskörper gemäß Anspruch 7 mit einer Vickers-Härte HV_{0,5} von ≤ 1500.

9. Presskörper gemäß einem der Ansprüche 7 oder 8 für die Verwendung in der Medizin.

10. Presskörper gemäß Anspruch 9 für die Verwendung bei der Zahnprothese-Pflege, als Zahnimplantat, als Hüft-, Knie-, Schulter-, Knöchel- und Fingerimplantat.

11. Presskörper gemäß Anspruch 9 für die Verwendung als Werkzeug zum Einführen von Implantatschrauben in das Zahnfeld, Bohrer, Skalpell, Ausräumwerkzeug und Schneider.

12. Verwendung des Presskörpers gemäß einem der Ansprüche 7 oder 8 in der Technik.

13. Verwendung gemäß Anspruch 12 auf dem mechanischen Gebiet in der Hydraulik und Pneumatik, als Verschleißkomponente mit Versiegelungseigenschaften, als Druckplatte, als wärmeisolierende Komponente, als technische Schneidekante und als nichtgeschmierte Gleitpaarung in der Mikropräzisionstechnologie.

## Revendications

1. Matériau fritté comprenant :
de 98 à 50 % en volume de zircone comme matrice, qui est stabilisée avec
i) de 2 à 3 pour cent en moles d'oxyde d'yttrium ;
ii) ou de 10 à 15 pour cent en moles d'oxyde de cérium ;
iii) ou un mélange d'oxyde de cérium et d'oxyde d'yttrium dans les gammes de quantités indiquées en i) et ii), une stabilisation maximale de 3 pour cent en moles relatifs à l'oxyde d'yttrium pur et 15 pour cent en moles relatifs à l'oxyde de cérium pur, respectivement, n'étant pas dépassée, 3 pour cent en moles d'oxyde d'yttrium et 15 pour cent en moles d'oxyde de cérium n'étant pas compris, et le terme de pour cent en moles se rapportant à la matrice de zircone, la matrice de zircone pouvant être obtenue à partir de
a) une poudre de particules de zircone ayant une taille moyenne de particules ≤ 0,35 µm,
b) les particules sont recouvertes avec les oxydes stabilisants d'yttrium et/ou de cérium pour stabiliser la zircone,
c) une stabilisation de la phase tétragonale est effectuée par une réaction de diffusion par un procédé de frittage,
et
de 2 à 50 % en volume d'alumine dont 5 à 90 % en volume se présente sous la forme de plaquettes hexagonales de formule générale LaAl₁₁O₈ qui sont formées par frittage à des températures inférieures à 1500 °C.

2. Matériau selon la revendication 1, dans lequel la fraction volumique des plaquettes hexagonales est de 10 à 75 % en volume.

3. Matériau selon l'une au moins des revendications 1 et 2, dans lequel le rapport de forme desdites plaquettes hexagonales est d'au moins 2.

4. Procédé dans lequel un matériau fritté selon l'une au moins des revendications 1 à 3 est préparé
à partir de 98 à 50 % en volume de zircone qui est stabilisée avec
i) de 2 à 3 pour cent en moles d'oxyde d'yttrium ;
ii) ou de 10 à 15 pour cent en moles d'oxyde de cérium ;
iii) ou un mélange d'oxyde de cérium et d'oxyde d'yttrium dans les gammes de quantités indiquées en i) et ii), une stabilisation maximale de 3 pour cent en moles relatifs à l'oxyde d'yttrium pur et 15 pour cent en moles relatifs à l'oxyde de cérium pur, respectivement, n'étant pas dépassée, 3 pour cent en moles d'oxyde d'yttrium et 15 pour cent en moles d'oxyde de cérium n'étant pas compris, et le terme de pour cent en moles se rapportant à la matrice de zircone, la matrice de zircone pouvant être obtenue à partir de
a) une poudre de particules de zircone ayant une taille moyenne de particules ≤ 0,35 µm,
b) les particules sont recouvertes avec les oxydes stabilisants d'yttrium et/ou de cérium pour stabiliser la zircone,
c) une stabilisation de la phase tétragonale est effectuée par une réaction de diffusion par un procédé de frittage,
et de 2 à 50 % en volume d'alumine dont 5 à 90 % en volume se présente sous la forme de plaquettes hexagonales de formule générale LaAl₁₁O₈ qui sont formées par frittage à des températures inférieures à 1500 °C,
dans lequel un mélange de poudres est broyé en suspension aqueuse, mélangé avec un liant, séché par atomisation, comprimé et fritté.

5. Procédé selon la revendication 4, dans lequel un préfrittage jusqu'à la porosité fermée est suivi d'un procédé de post-compression isostatique à chaud.

6. Procédé selon la revendication 4 et/ou 5, dans lequel le mélange de poudres séché par atomisation est soumis à une plastification, injecté dans un moule, débarrassé du liant, fritté ou préfritté et soumis à une post-compression isostatique à chaud.

7. Matériau fritté selon l'une des revendications 1 à 3, le matériau fritté ayant une résistance mécanique ≥ 800 MPa telle que mesurée selon DIN EN ISO 6872 et/ou ayant une ténacité à la rupture ≥ 6 MPa·m^{½} telle que mesurée selon DIN CEN/TS 14425-5 et/ou ayant un module d'élasticité ≤ 250 GPa tel que mesuré selon DIN EN 843 Partie 2.

8. Comprimé selon la revendication 7, ayant une dureté Vickers HV_{0,5} ≤ 1500.

9. Comprimé selon l'une quelconque des revendications 7 et 8 pour utilisation en médecine.

10. Comprimé selon la revendication 9 pour utilisation en soins dentaires prothétiques, comme implant dentaire, comme prothèse de hanche, genou, épaule, cheville et doigt.

11. Comprimé selon la revendication 9 pour utilisation comme outil pour insérer des vis d'implants dans le domaine dentaire, fraise, scalpel, outil de brochage et couteau.

12. Utilisation du comprimé selon l'une quelconque des revendications 7 et 8 en ingénierie.

13. Utilisation selon la revendication 12 dans le domaine mécanique en hydraulique et pneumatique, comme composant d'usure avec des propriétés de scellement, comme plaque d'impression, comme composant calorifuge, comme tranchant technique et comme paire de glissement non lubrifiée en technologie de microprécision.
